# EUROPEAN PATENT SPECIFICATION

(11) **EP 3 534 659 B1**
(45) Date of publication and mention of the grant of the patent: **05.05.2021**
(21) Application number: 17886484.9
(22) Date of filing: 28.12.2017
(51) Int. Cl.: H04W 72/04, H04W 72/12

(54) **DOWNLINK CONTROL CHANNEL INDICATION METHOD, TERMINAL DEVICE AND NETWORK DEVICE**
DOWNLINK-STEUERKANALANZEIGEVERFAHREN, ENDGERÄTEVORRICHTUNG UND NETZWERKVORRICHTUNG
PROCÉDÉ D'INDICATION DE CANAL DE COMMANDE DE LIAISON DESCENDANTE, DISPOSITIF DE TERMINAL ET DISPOSITIF DE RÉSEAU

(30) Priority: 30.12.2016 CN 201611269940
(43) Date of publication of application: 04.09.2019
(73) Proprietor: Huawei Technologies Co., Ltd., Longgang District Shenzhen, Guangdong 518129 (CN)
(72) Inventor: ZHOU, Guohua, Shenzhen Guangdong 518129 (CN); TANG, Hao, Shenzhen Guangdong 518129 (CN); ZHAO, Yinan, Shenzhen Guangdong 518129 (CN); LIU, Zhe, Shenzhen Guangdong 518129 (CN)
(74) Representative: Isarpatent
(86) International application number: PCT/CN2017/119281
(87) International publication number: WO 2018/121648

(56) References cited:
- EP-A1- 2 590 350
- EP-A1- 2 816 852
- WO-A1-2016/131326
- CN-A- 101 404 526
- CN-A- 101 841 892
- CN-A- 102 186 251
- MOTOROLA: "Reliable Downlink Control for Heterogeneous Networks", 3GPP DRAFT; R1-093971-RELIABLE DL CONTROL FOR HETNET_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388463, [retrieved on 2009-10-06]

## Description

### TECHNICAL FIELD

This invention relates to the field of communications technologies, and in particular, to a downlink control channel indication method, a terminal device, and a network device.

### BACKGROUND

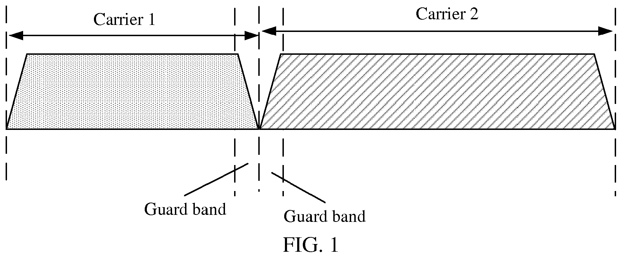

Currently, carriers in a wireless communications system are usually deployed through frequency division multiplexing (frequency division multiplexing, FDM). During carrier deployment, to avoid frequency band overlapping caused by frequency offset to affect transmission of each carrier, as shown in FIG. 1, there is a guard band between two carriers. This rule is generally applicable to carrier deployment in a same standard or between different standards.

The foregoing carrier deployment method requires width matching between a carrier and a frequency band, and a bandwidth of the carrier is usually fixed in a standard. For example, the bandwidth of the carrier is fixed to 5 MHz in a universal mobile telecommunications system (universal mobile telecommunications system, UMTS), and is fixed to 1.4 MHz, 3 MHz, 5 MHz, 10 MHz, 15 MHz, or 20 MHz in long term evolution (Long Term Evolution, LTE). This is easy to cause a deployment waste of a frequency band resource when the frequency band is irregular.

To resolve the problem of the deployment waste of the frequency band resource, a new idea is that direct overlapping (including three overlapping manners, namely, partial overlapping, complete overlapping, and excessive overlapping) between two carriers is allowed. Signals of the two carriers can be flexibly sent concurrently on frequency bands corresponding to the two carriers through processing in an overlapping area, to reuse the frequency band and flexibly deploy the carriers.

Further, to avoid the deployment waste of the frequency band resource, in a discussion process of a current 5th generation (5th-Generation, 5G) new radio technology standard, frequency band coexistence between two carriers is a project to be standardized. In the project, when two overlapping carriers are deployed, how to determine a location of a physical downlink control channel (physical downlink control channel, PDCCH) time-frequency resource by a terminal device and then learn of information such as resource allocation based on downlink scheduling information in downlink control information is an important problem.

Some technological background art of the invention in connection with the above explanations is disclosed in the following patent prior art documents:
D1 WO 2016/131326 A1 (ZTE CORP) 25 August 2016 (2016-08-25); -& EP 3 328 110 A1 (ZTE CORP [CN]) 30 May 2018 (2018-05-30)
D2 EP 2 590 350 A1 (PANASONIC CORP [JP]) 8 May 2013 (2013-05-08
D3 EP 2 816 852 A1 (ZTE CORP [CN]) 24 December 2014 (2014-12-24)
In particular, documents D1-D3 disclose the preamble features a) and b) of the independent claims 1, 6, 9, 10.

### SUMMARY

The object of the present invention is to provide a downlink control channel indication method, a terminal device, and a network device, to enable the terminal device to determine a location of a PDCCH time frequency resource when a first time frequency resource partially or completely overlaps with a second time frequency resource (to be specific, two carriers partially or completely overlap with each other). This object is solved by a downlink control channel indication method according to claim 1, a downlink control channel indication method according to claim 6, a terminal device according to claim 9, a network device according to claim 10, a computer-readable storage medium according to claim 11, a computer program product according to claim 12 and a communications device according to claim 13. Further advantageous embodiments and improvements of the invention are listed in the dependent claims.

In the embodiments of the invention, the first time frequency resource may be a 5th generation radio carrier, a new radio (New Radio, NR) carrier, an LTE carrier, or the like; the second time frequency resource may be an LTE carrier, a UMTS carrier, a global system for mobile communications (global system for mobile communication, GSM) carrier, or the like. The first time frequency resource is different from the second time frequency resource.

### BRIEF DESCRIPTION OF DRAWINGS

To describe the technical solutions in the embodiments of this invention more clearly, the following briefly describes the accompanying drawings required for describing the embodiments or the prior art.
FIG. 1 is a schematic diagram of conventional carrier deployment;
FIG. 2 is a schematic diagram of an application scenario according to an embodiment of this invention;
FIG. 3 is a flowchart of a downlink control channel indication method according to an embodiment of this invention;
FIG. 4 is a schematic diagram of a preset frequency band of an NR carrier according to an embodiment of this invention;
FIG. 5 is a schematic diagram of another preset frequency band of an NR carrier according to an embodiment of this invention;
FIG. 6 is a schematic diagram of a control area of a first time frequency resource according to an embodiment of this invention;
FIG. 7 is a schematic diagram of a location of a PDCCH time frequency resource in a first time frequency resource according to an embodiment of this invention;
FIG. 8 is a flowchart of another downlink control channel indication method according to an embodiment of this invention;
FIG. 9 is a schematic diagram of an indication manner of a PDCCH time frequency resource in an LTE carrier according to an embodiment of this invention;
FIG. 10 is a schematic diagram of a terminal device according to an embodiment of this invention;
FIG. 11 is a schematic diagram of a network device according to an embodiment of this invention;
FIG. 12 is a schematic structural diagram of a terminal device according to an embodiment of this invention; and
FIG. 13 is a schematic structural diagram of a network device according to an embodiment of this invention.

### DESCRIPTION OF EMBODIMENTS

To make a person skilled in the art understand the technical solutions in the embodiments of this invention better, and make the objectives, features, and advantages of the embodiments of this invention clearer, the following further describes the technical solutions in the embodiments of this invention in detail with reference to the accompanying drawings.

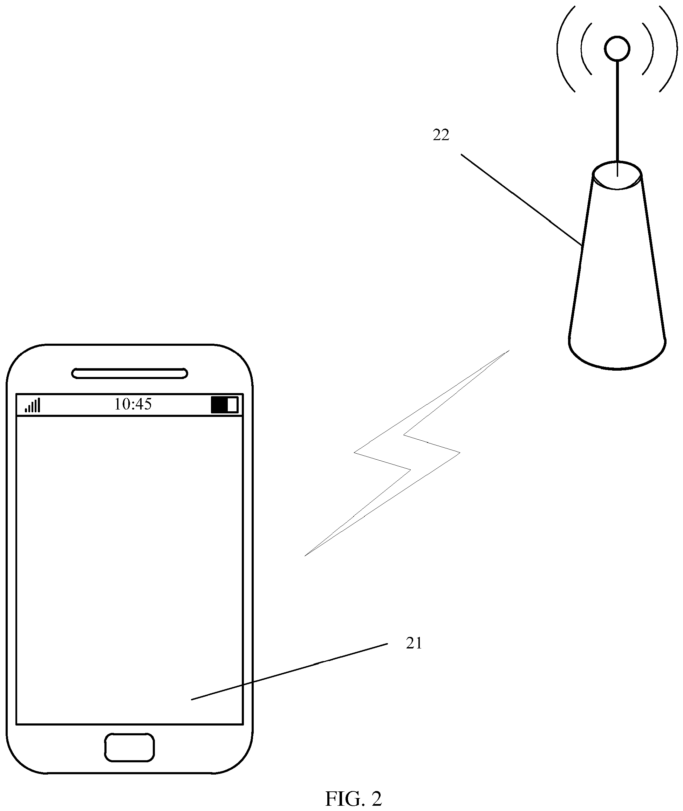

Before the technical solutions of the embodiments of this invention are described, an application scenario of the embodiments of this invention is first described with reference to the accompanying drawings. FIG. 2 is a schematic diagram of an application scenario according to an embodiment of this invention. In the application scenario, a first time frequency resource partially or completely overlaps with a second time frequency resource. There is a terminal device 21 and a network device 22 in the application scenario. In the following embodiments, a 5th generation radio carrier, an NR carrier, an LTE carrier, or the like may be deployed on a frequency band corresponding to the first time frequency resource, and an LTE carrier, a UMTS carrier, a GSM carrier, or the like may be deployed on a frequency band corresponding to the second time frequency resource. The first time frequency resource is different from the second time frequency resource.

In this embodiment of this invention, in a specific implementation process, the terminal device 21 may be a device providing voice and/or data connectivity to a user, a handheld device having a wireless connection function, or another processing device connected to a wireless modem. The terminal device 21 may communicate with one or more core networks through a radio access network (radio access network, RAN). The terminal device 21 may be a mobile terminal, for example, a mobile phone (or referred to as a "cellular" phone) or a computer having a mobile terminal. For example, the terminal device 21 may be a portable, pocket-sized, handheld, computer-built in, or in-vehicle mobile apparatus that exchanges a language and/or data with the radio access network, for example, a device such as a personal communications service (personal communication service, PCS) phone, a cordless telephone set, a Session Initiation Protocol (Session Initiation Protocol, SIP) phone, a wireless local loop (wireless local loop, WLL) station, or a personal digital assistant (personal digital assistant, PDA). The terminal device 21 may also be referred to as a system, a subscriber unit (subscriber unit, SU), a subscriber station (subscriber station, SS), a mobile station (mobile station, MS), a remote station (remote station, RS), an access point (access point, AP), a remote terminal (remote terminal, RT), an access terminal (access terminal, AT), a user terminal (user terminal, UT), a user agent (user agent, UA), a user device, or user equipment (user equipment, UE). The network device 22 may be a base station, an enhanced base station, a relay having a scheduling function, a device having a base station function, or the like. The base station may be an evolved NodeB (evolved Node B, eNB) in an LTE system, or may be a base station in another system. This is not limited in this embodiment of this invention.

In the embodiments of this invention, the network device 22 may send indication information on a preset frequency band of a first time frequency resource, and the terminal device 21 may receive the indication information sent by the network device 22. The terminal device 21 may determine a location of a physical downlink control channel PDCCH time frequency resource of the first time frequency resource according to the indication information. In the embodiments of this invention, in a specific implementation process, the preset frequency band of the first time frequency resource and the indication information sent by the network device 22 on the preset frequency band each have a plurality of existence forms. When the indication information is different, manners of determining the location of the physical downlink control channel PDCCH time frequency resource of the first time frequency resource by the terminal device 21 according to the indication information are also different. After determining the location of the physical downlink control channel PDCCH time frequency resource of the first time frequency resource, the terminal device 21 may determine a location of an EPDCCH time frequency resource of the first time frequency resource according to an indication of a PDCCH of the first time frequency resource.

For ease of understanding, operation steps of the terminal device 21 and the network device 22 in the application scenario shown in FIG. 2 are described below by using specific embodiments.

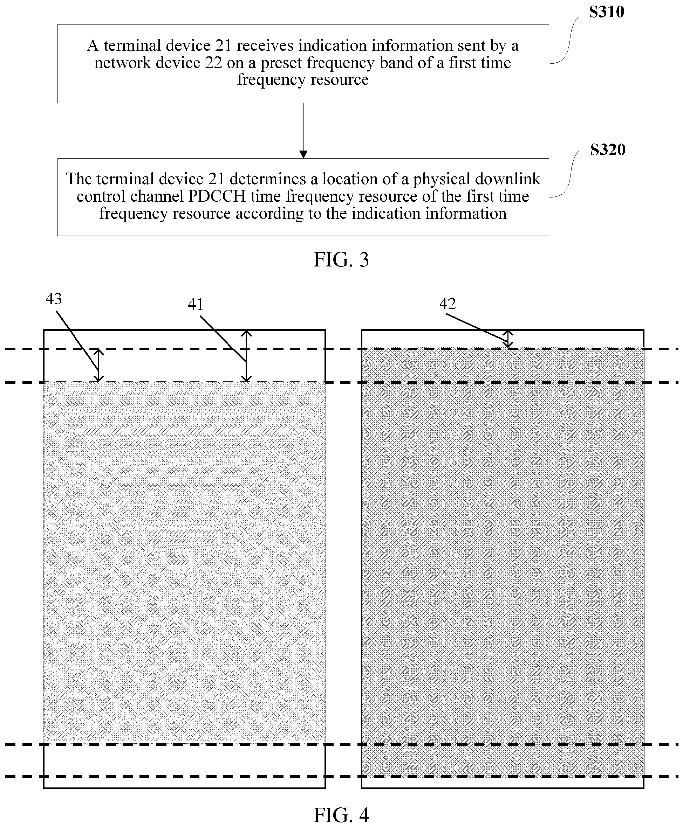

FIG. 3 is a flowchart of a downlink control channel indication method according to an embodiment of this invention. This embodiment is executed by the terminal device 21. Specifically, this embodiment includes the following steps.

In step S310, the terminal device 21 receives indication information sent by the network device 22 on a preset frequency band of a first time frequency resource.

The first time frequency resource partially or completely overlaps with a second time frequency resource.

In this embodiment, when the first time frequency resource completely overlaps with the second time frequency resource, the first time frequency resource is different from the second time frequency resource. Therefore, a guard band of the first time frequency resource and a guard band of the second time frequency resource have different bandwidths, to be specific, there is a band interval between the guard band of the first time frequency resource and the guard band of the second time frequency resource, and the band interval is interference-free to the second time frequency resource. Therefore, in a specific implementation of this embodiment of this invention, the band interval between the guard band of the first time frequency resource and the guard band of the second time frequency resource may be used as the preset frequency band of the first time frequency resource. An example in which the first time frequency resource is an NR carrier and the second time frequency resource is LTE is used below for description.

As shown in FIG. 4, when the NR carrier completely overlaps with the LTE carrier, a guard band 41 of the LTE carrier accounts for 10% of a bandwidth, to be specific, the guard band of the LTE carrier on each of two sides accounts for 5% of the bandwidth. Currently, it has been determined that a guard band 42 of the NR carrier accounts for less than 10% of a bandwidth. Therefore, there is a band interval 43 between the guard band 41 of the LTE carrier and the guard band 42 of the NR carrier, and the band interval 43 is interference-free to the LTE carrier. In the scenario, the band interval 43 may be used as a preset frequency band of the NR carrier. The network device 22 may send the indication information by using the band interval 43, and the terminal device 21 may receive the indication information on the band interval 43.

In addition, considering that a transmission rate can be greatly improved in an enhanced mobile broadband eMBB scenario, when the first time frequency resource is a 5G carrier such as a 5th generation radio carrier or an NR carrier, eMBB having a high bandwidth may be considered to be introduced. In this case, when the first time frequency resource completely overlaps with the second time frequency resource, the second time frequency resource may be set to be a time frequency resource obtained after LTE carrier aggregation, and a guard band between an LTE primary component carrier and an LTE secondary component carrier in the LTE carrier aggregation or a guard band between LTE secondary component carriers is used as the preset frequency band for utilization. An example in which the first time frequency resource is an NR carrier and the second time frequency resource is a time frequency resource obtained after LTE carrier aggregation is used below for description.

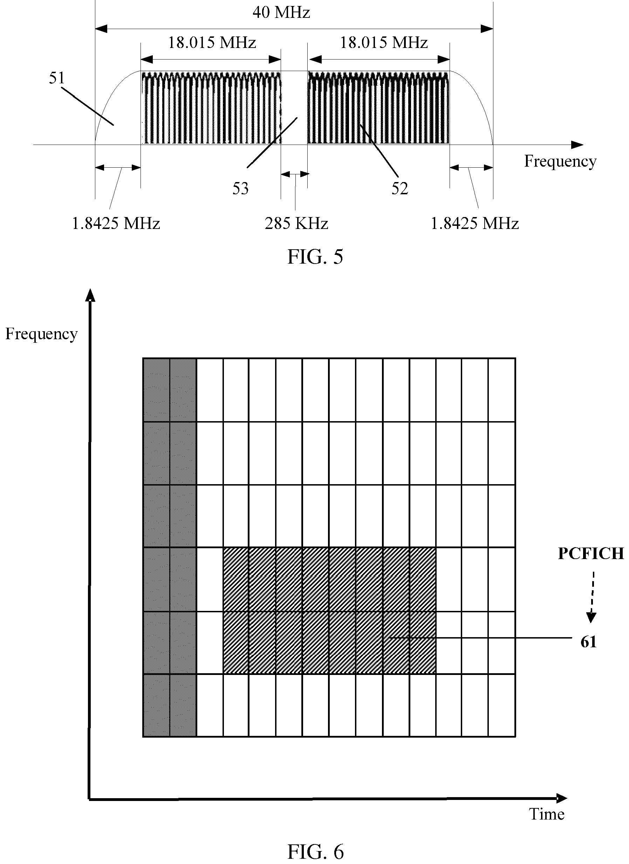

For example, the NR carrier has a bandwidth of 40 MHz, and the time frequency resource obtained after the LTE carrier aggregation is formed through aggregation of two 20-MHz LTE carriers. As shown in FIG. 5, except for a 1.8425-MHz guard band 51 and an 18.015-MHz available frequency band 52 on each of two ends, there is still a 285-KHz guard band 53 between the LTE primary component carrier and the LTE secondary component carrier or between the LTE secondary component carriers. The guard band 53 is interference-free to the second time frequency resource. Therefore, the guard band 53 may be used as the preset frequency band of the NR carrier. The network device 22 may send the indication information by using the guard band 53, and the terminal device 21 may receive the indication information on the guard band 53. It should be noted herein that, bandwidths of the guard band 51, the available frequency band 52, and the guard band 53 may be adjusted based on an actual case.

In this embodiment, the preset frequency band of the first time frequency resource may alternatively be a frequency band occupied by a PBCH (Physical Broadcast Channel, physical broadcast channel) of the first time frequency resource. The network device 22 may send the indication information to the terminal device 21 by using the PBCH, to flexibly indicate the location of the PDCCH time frequency resource of the first time frequency resource, and avoid a conflict with an existing signal on the second time frequency resource.

In this embodiment, the indication information sent by the network device 22 on the preset frequency band of the first time frequency resource may have a plurality of existence forms. For example, the indication information may include a physical control format indicator channel (physical control format indicator channel, PCFICH). For another example, the indication information may include: a starting time-domain orthogonal frequency division multiplexing (orthogonal frequency division multiplexing, OFDM) symbol, a quantity of time-domain OFDM symbols, a starting frequency-domain physical resource block (physical resource block, PRB), and a quantity of frequency-domain PRBs.

In step S320, the terminal device 21 determines a location of a physical downlink control channel PDCCH time frequency resource of the first time frequency resource according to the indication information.

In this embodiment of this invention, in a specific implementation process, based on different expression forms of the indication information received by the terminal device 21 in step S310, step S320 is correspondingly implemented in different forms.

For example, when the indication information received by the terminal device 21 in step S310 includes the physical control format indicator channel PCFICH, step S320 may include:
determining, by the terminal device 21, a control area of the first time frequency resource based on the PCFICH; and
performing, by the terminal device 21, blind detection in the control area of the first time frequency resource to determine the location of the PDCCH time frequency resource of the first time frequency resource.

The PCFICH includes location information of a time frequency resource on which the control area of the first time frequency resource is located. When a PRB on which the control area of the first time frequency resource is located is agreed in a protocol, the location information is time domain information of an OFDM symbol on which the control area of the first time frequency resource is located. When an OFDM symbol on which the control area of the first time frequency resource is located is agreed in a protocol, the location information is frequency domain information of a PRB on which the control area of the first time frequency resource is located. The location information may alternatively include both frequency domain information of a PRB on which the control area of the first time frequency resource is located and time domain information of an OFDM symbol on which the control area of the first time frequency resource is located. The terminal device 21 may determine the control area of the first time frequency resource based on the location information.

In this implementation, in a specific implementation process, the PCFICH may be a self-contained indication, to be specific, the PCFICH may be located in the control area of the first time frequency resource. In this case, the control area of the first time frequency resource overlaps with the preset frequency band. The PCFICH may alternatively be located on another frequency band outside the control area of the first time frequency resource. In this case, the control area of the first time frequency resource does not overlap with the preset frequency band.

For an implementation process in this implementation, refer to FIG. 6. After receiving the PCFICH, the terminal device 21 determines a control area 61 of the first time frequency resource according to an indication of the PCFICH. Then, the terminal device 21 performs blind detection in the control area 61 of the first time frequency resource to determine the location of the PDCCH time frequency resource of the first time frequency resource.

For another example, when the indication information received by the terminal device 21 in step S310 includes the starting time-domain orthogonal frequency division multiplexing OFDM symbol, the quantity of time-domain OFDM symbols, the starting frequency-domain physical resource block PRB, and the quantity of frequency-domain PRBs, step S320 may include:
determining, by the terminal device 21, the location of the physical downlink control channel PDCCH time frequency resource of the first time frequency resource based on the starting time-domain orthogonal frequency division multiplexing OFDM symbol, the quantity of time-domain OFDM symbols, the starting frequency-domain physical resource block PRB, and the quantity of frequency-domain PRBs.

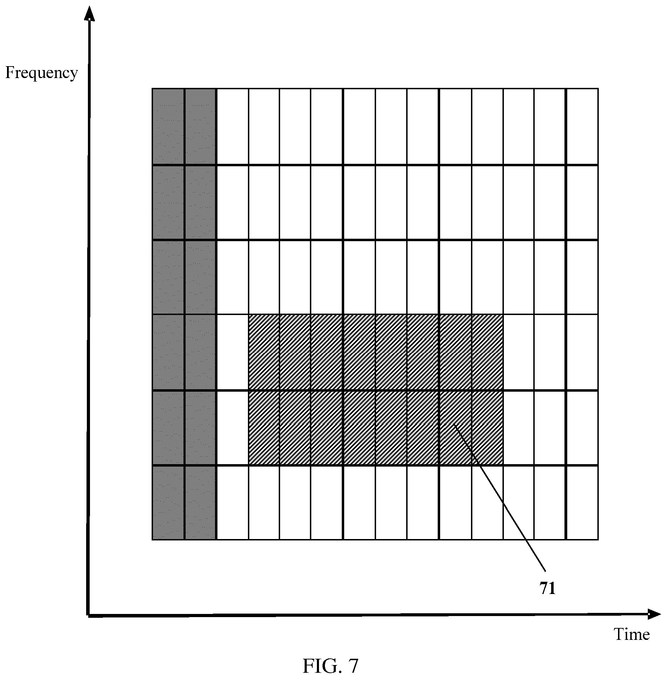

For an implementation process in this implementation, refer to FIG. 7. After receiving the indication information, the terminal device 21 learns, based on the starting time-domain orthogonal frequency division multiplexing OFDM symbol, the quantity of time-domain OFDM symbols, the starting frequency-domain physical resource block PRB, and the quantity of frequency-domain PRBs in the indication information, that the starting time-domain OFDM symbol is the fourth OFDM symbol, the quantity of time-domain OFDM symbols is 8, the starting frequency-domain PRB is the second PRB, and the quantity of frequency-domain PRBs is 2. Therefore, the terminal device 21 may determine the location of the PDCCH time frequency resource of the first time frequency resource, as shown in 71 in FIG. 7.

In this implementation, the indication information includes the starting time-domain orthogonal frequency division multiplexing OFDM symbol, the quantity of time-domain OFDM symbols, the starting frequency-domain physical resource block PRB, and the quantity of frequency-domain PRBs. The terminal device 21 may directly determine the location of the physical downlink control channel PDCCH time frequency resource of the first time frequency resource based on the starting time-domain orthogonal frequency division multiplexing OFDM symbol, the quantity of time-domain OFDM symbols, the starting frequency-domain physical resource block PRB, and the quantity of frequency-domain PRBs that are included in the indication information. In this implementation, the terminal device 21 does not need to learn of the control area of the first time frequency resource. Therefore, in this implementation, a process of determining the location of the physical downlink control channel PDCCH time frequency resource of the first time frequency resource is easier.

According to the downlink control channel indication method provided in this embodiment of this invention, when the first time frequency resource partially or completely overlaps with the second time frequency resource, the terminal device receives the indication information sent by the network device on the preset frequency band of the first time frequency resource, and determines the location of the PDCCH time frequency resource of the first time frequency resource according to the indication information. Then, the terminal device may determine a location of an EPDCCH time frequency resource of the first time frequency resource according to an indication of a PDCCH of the first time frequency resource. When the second time frequency resource is an LTE carrier, the first time frequency resource is a 5G carrier (namely, a 5th generation radio carrier, an NR carrier, or the like). In this case, in this technical solution of this embodiment of this invention, the terminal device of the 5G carrier can determine the location of the PDCCH time frequency resource of the 5G carrier according to the indication information.

In addition, in an actual application, the preset frequency band may be occupied by the second time frequency resource, and the preset frequency band can be neither occupied by the first time frequency resource nor used to send the PCFICH. In this case, the network device 22 may send the PCFICH on a candidate frequency band of the first time frequency resource, and the terminal device 21 may perform blind detection on the candidate frequency band to obtain the PCFICH. After obtaining the PCFICH through the blind detection, the terminal device may determine the control area of the first time frequency resource based on the PCFICH, and further perform the blind detection in the control area to determine the location of the PDCCH time frequency resource of the first time frequency resource. The candidate frequency band may be all other frequency bands than the preset frequency band on the first time frequency resource. Alternatively, a frequency band at a particular location outside the preset frequency band on the first time frequency resource may be used as the candidate frequency band. For example, one or more OFDM symbols neighboring to the preset frequency band may be used as the candidate frequency band.

Further, the network device 22 may send time-domain offset at an OFDM symbol level and/or frequency-domain offset at a PRB level on the PBCH of the first time frequency resource, to be specific, the PBCH may include the time-domain offset at the orthogonal frequency division multiplexing OFDM symbol level and/or the frequency-domain offset at the physical resource block PRB level.

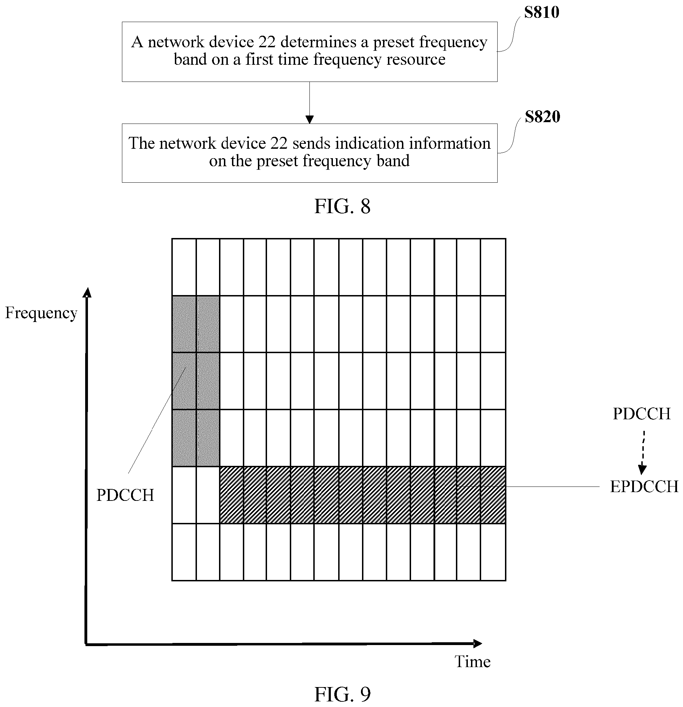

FIG. 8 is a flowchart of another downlink control channel indication method according to an embodiment of this invention. This embodiment is executed by the network device 22. Specifically, this embodiment includes the following steps.

In step S810, the network device 22 determines a preset frequency band on a first time frequency resource.

The first time frequency resource partially or completely overlaps with a second time frequency resource. The preset frequency band determined by the network device 22 may have different expression forms based on an actual scenario.

When the first time frequency resource completely overlaps with the second time frequency resource, the first time frequency resource is different from the second time frequency resource. Therefore, a guard band of the first time frequency resource and a guard band of the second time frequency resource have different bandwidths, to be specific, there is a band interval between the guard band of the first time frequency resource and the guard band of the second time frequency resource, and the band interval is interference-free to the second time frequency resource. Therefore, in a specific implementation of this embodiment of this invention, the band interval between the guard band of the first time frequency resource and the guard band of the second time frequency resource may be used as the preset frequency band of the first time frequency resource. An example in which the first time frequency resource is an NR carrier and the second time frequency resource is LTE is used below for description.

As shown in FIG. 4, when the NR carrier completely overlaps with the LTE carrier, a guard band 41 of the LTE carrier accounts for 10% of a bandwidth, to be specific, the guard band of the LTE carrier on each of two sides accounts for 5% of the bandwidth. Currently, it has been determined that a guard band 42 of the NR carrier accounts for less than 10% of a bandwidth. Therefore, there is a band interval 43 between the guard band 41 of the LTE carrier and the guard band 42 of the NR carrier, and the band interval 43 is interference-free to the LTE carrier. In the scenario, the band interval 43 may be used as a preset frequency band of the NR carrier. The network device 22 may send the indication information by using the band interval 43, and the terminal device 21 may receive the indication information on the band interval 43.

In addition, considering that a transmission rate can be greatly improved in an enhanced mobile broadband eMBB scenario, when the first time frequency resource is a 5G carrier such as a 5th generation radio carrier or an NR carrier, eMBB having a high bandwidth may be considered to be introduced. In this case, when the first time frequency resource completely overlaps with the second time frequency resource, the second time frequency resource may be set to be a time frequency resource obtained after LTE carrier aggregation, and a guard band between an LTE primary component carrier and an LTE secondary component carrier in the LTE carrier aggregation or a guard band between LTE secondary component carriers is used as the preset frequency band for utilization. An example in which the first time frequency resource is an NR carrier and the second time frequency resource is a time frequency resource obtained after LTE carrier aggregation is used below for description.

For example, the NR carrier has a bandwidth of 40 MHz, and the time frequency resource obtained after the LTE carrier aggregation is formed through aggregation of two 20-MHz LTE carriers. As shown in FIG. 5, except for a 1.8425-MHz guard band 51 and an 18.015-MHz available frequency band 52 on each of two ends, there is still a 285-KHz guard band 53 between the LTE primary component carrier and the LTE secondary component carrier or between the LTE secondary component carriers. The guard band 53 is interference-free to the second time frequency resource. Therefore, the guard band 53 may be used as the preset frequency band of the NR carrier. The network device 22 may send the indication information by using the guard band 53, and the terminal device 21 may receive the indication information on the guard band 53. It should be noted herein that, bandwidths of the guard band 51, the available frequency band 52, and the guard band 53 may be adjusted based on an actual case.

In this embodiment, the preset frequency band of the first time frequency resource may alternatively be a frequency band occupied by a physical broadcast channel (physical broadcast channel, PBCH) of the first time frequency resource.

In step S820, the network device 22 sends indication information on the preset frequency band.

The indication information sent by network device 22 on the preset frequency band may include a physical control format indicator channel PCFICH. Alternatively, the indication information sent by network device 22 on the preset frequency band may include a starting time-domain orthogonal frequency division multiplexing OFDM symbol, a quantity of time-domain OFDM symbols, a starting frequency-domain physical resource block PRB, and a quantity of frequency-domain PRBs.

In this embodiment, when the preset frequency band is the PBCH of the first time frequency resource, the network device 22 may send the indication information to the terminal device 21 by using the PBCH, to flexibly indicate a location of a PDCCH time frequency resource of the first time frequency resource, and avoid a conflict with an existing signal on the second time frequency resource.

According to the downlink control channel indication method provided in this embodiment of this invention, when the first time frequency resource partially or completely overlaps with the second time frequency resource, the network device sends the indication information on the preset frequency band of the first time frequency resource. When receiving the indication information, the terminal device may determine the location of the PDCCH time frequency resource of the first time frequency resource according to the indication information. Then, the terminal device may determine a location of an EPDCCH time frequency resource of the first time frequency resource according to an indication of a PDCCH of the first time frequency resource.

In addition, in an actual invention, the preset frequency band may be occupied by the second time frequency resource, and the preset frequency band can be neither occupied by the first time frequency resource nor used to send the PCFICH. In this case, the network device 22 may send the PCFICH on a candidate frequency band of the first time frequency resource, and the terminal device 21 may perform blind detection on the candidate frequency band to obtain the PCFICH. After obtaining the PCFICH through the blind detection, the terminal device may determine a control area of the first time frequency resource based on the PCFICH, and further perform blind detection in the control area to determine the location of the PDCCH time frequency resource of the first time frequency resource. The candidate frequency band may be all other frequency bands than the preset frequency band on the first time frequency resource. Alternatively, a frequency band at a particular location outside the preset frequency band on the first time frequency resource may be used as the candidate frequency band. For example, one or more OFDM symbols neighboring to the preset frequency band may be used as the candidate frequency band.

Further, the network device 22 may send time-domain offset at an OFDM symbol level and/or frequency-domain offset at a PRB level on the PBCH of the first time frequency resource, to be specific, the PBCH may include the time-domain offset at the orthogonal frequency division multiplexing OFDM symbol level and/or the frequency-domain offset at the physical resource block PRB level.

It should be particularly noted that, when the first time frequency resource is a 5G carrier such as a 5th generation carrier or an NR carrier and the second time frequency resource is an LTE carrier, not only the terminal device of the 5G carrier needs to determine the location of the PDCCH time frequency resource of the 5G carrier based on the indication information by using the downlink control channel indication method in the foregoing method embodiments, but also a terminal device of the LTE carrier needs to determine a location of a PDCCH time frequency resource of the LTE carrier. In this case, the terminal device of the LTE carrier may determine the location of the PDCCH time frequency resource of the LTE carrier by using the following method.

Specifically, the network device indicates, to the terminal device by using the PCFICH, a quantity X (where X is equal to 1, 2, or 3) of OFDM symbols occupied by an LTE common control area. Then, the terminal device performs blind detection in the LTE common control area to determine the location of the PDCCH time frequency resource. In an example shown in FIG. 9, the PCFICH indicates that an area in which the former two (namely, X=2) OFDM symbols are located is the LTE common control area. Based on the foregoing, the terminal device performs the blind detection in the LTE common control area to determine the location of the PDCCH time frequency resource. The terminal device determines a location of an EPDCCH time frequency resource based on an indication of a PDCCH. When the first time frequency resource is a 5G carrier such as a 5th generation radio carrier or an NR carrier and the second time frequency resource is an LTE carrier, a quantity of OFDM symbols occupied by the control area of the first time frequency resource may be the same as or different from that occupied by the LTE common control area.

Corresponding to the foregoing method embodiments, the embodiments of this invention further provide corresponding embodiments of apparatuses such as a terminal device and a network device.

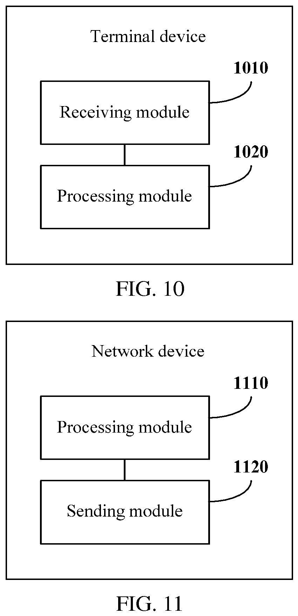

FIG. 10 is a schematic structural diagram of a terminal device according to an embodiment of this invention. The terminal device is configured to perform the downlink control channel indication method shown in FIG. 3. The terminal device may include a receiving module 1010 and a processing module 1020.

The receiving module 1010 is configured to receive indication information sent by a network device on a preset frequency band of a first time frequency resource. The first time frequency resource partially or completely overlaps with a second time frequency resource.

The processing module 1020 is configured to determine a location of a physical downlink control channel PDCCH time frequency resource of the first time frequency resource according to the indication information.

According to the terminal device provided in this embodiment of this invention, when the first time frequency resource partially or completely overlaps with the second time frequency resource, the terminal device receives the indication information sent by the network device on the preset frequency band of the first time frequency resource, and determines the location of the PDCCH time frequency resource of the first time frequency resource according to the indication information. Then, the terminal device may determine a location of an EPDCCH time frequency resource of the first time frequency resource according to an indication of a PDCCH of the first time frequency resource. When the second time frequency resource is an LTE carrier, the first time frequency resource is a 5G carrier (namely, a 5th generation radio carrier, an NR carrier, or the like). In this case, in this technical solution of this embodiment of this invention, the terminal device of the 5G carrier can determine the location of the PDCCH time frequency resource of the 5G carrier according to the indication information.

In the embodiments of this invention, when the first time frequency resource completely overlaps with the second time frequency resource, the preset frequency band is a band interval between a guard band of the first time frequency resource and a guard band of the second time frequency resource.

Optionally, in another specific implementation of this embodiment of this application, when the second time frequency resource is a time frequency resource obtained after LTE carrier aggregation and the first time frequency resource completely overlaps with the second time frequency resource, the preset frequency band is a guard band between an LTE primary component carrier and an LTE secondary component carrier in the LTE carrier aggregation or is a guard band between LTE secondary component carriers.

Optionally, in another specific implementation of this embodiment of this application, the receiving module 1010 is specifically configured to receive the indication information sent by the network device on a physical broadcast channel PBCH of the first time frequency resource.

Optionally, in another specific implementation of this embodiment of this application, the PBCH may include time-domain offset at an orthogonal frequency division multiplexing OFDM symbol level and/or frequency-domain offset at a physical resource block PRB level.

Optionally, in another specific implementation of this embodiment of this application, the indication information includes a physical control format indicator channel PCFICH. The processing module 1020 is specifically configured to: determine a control area of the first time frequency resource based on the PCFICH, where the PCFICH is located in the control area or is located on another frequency band outside the control area; and perform blind detection in the control area to determine the location of the PDCCH time frequency resource of the first time frequency resource.

Optionally, in another specific implementation of this embodiment of this application, the processing module is further configured to: when the preset frequency band is occupied by the second time frequency resource, perform blind detection on a candidate frequency band of the first time frequency resource to obtain the PCFICH. The candidate frequency band is all other frequency bands than the preset frequency band on the first time frequency resource, or is a frequency band at a particular location outside the preset frequency band on the first time frequency resource.

Optionally, in another specific implementation of this embodiment of this application, the indication information includes: a starting time-domain orthogonal frequency division multiplexing OFDM symbol, a quantity of time-domain OFDM symbols, a starting frequency-domain physical resource block PRB, and a quantity of frequency-domain PRBs. The processing module 1020 is specifically configured to determine the location of the physical downlink control channel PDCCH time frequency resource of the first time frequency resource based on the starting time-domain orthogonal frequency division multiplexing OFDM symbol, the quantity of time-domain OFDM symbols, the starting frequency-domain physical resource block PRB, and the quantity of frequency-domain PRBs.

FIG. 11 is a schematic structural diagram of a network device according to an embodiment of this application. The network device is configured to perform the downlink control channel indication method shown in FIG. 8. The network device may include a processing module 1110 and a sending module 1120.

The frequency band determining module 1110 is configured to determine a preset frequency band on a first time frequency resource. The first time frequency resource partially or completely overlaps with a second time frequency resource.

The information sending module 1120 is configured to send indication information on the preset frequency band. The indication information includes a physical control format indicator channel PCFICH or includes: a starting time-domain orthogonal frequency division multiplexing OFDM symbol, a quantity of time-domain OFDM symbols, a starting frequency-domain physical resource block PRB, and a quantity of frequency-domain PRBs.

According to the network device provided in this embodiment of this application, when the first time frequency resource partially or completely overlaps with the second time frequency resource, the network device sends the indication information on the preset frequency band of the first time frequency resource. When receiving the indication information, the terminal device may determine a location of a PDCCH time frequency resource of the first time frequency resource according to the indication information. Then, the terminal device may determine a location of an EPDCCH time frequency resource of the first time frequency resource according to an indication of a PDCCH of the first time frequency resource.

In the embodiments of this invention, when the first time frequency resource completely overlaps with the second time frequency resource, the preset frequency band is a band interval between a guard band of the first time frequency resource and a guard band of the second time frequency resource.

Optionally, in another specific implementation of this embodiment of this application, when the second time frequency resource is a time frequency resource obtained after LTE carrier aggregation and the first time frequency resource completely overlaps with the second time frequency resource, the preset frequency band is a guard band between an LTE primary component carrier and an LTE secondary component carrier in the LTE carrier aggregation or is a guard band between LTE secondary component carriers.

Optionally, in another specific implementation of this embodiment of this application, the preset frequency band is a frequency band on which a physical broadcast channel PBCH of the first time frequency resource is located.

Optionally, in another specific implementation of this embodiment of this application, the information sending module 1120 is further configured to: when the preset frequency band is occupied by the second time frequency resource, send, by the network device, the PCFICH on a candidate frequency band of the first time frequency resource. The candidate frequency band is all other frequency bands than the preset frequency band on the first time frequency resource, or is a frequency band at a particular location outside the preset frequency band on the first time frequency resource.

Optionally, in another specific implementation of this embodiment of this application, the PBCH may include time-domain offset at an orthogonal frequency division multiplexing OFDM symbol level and/or frequency-domain offset at a physical resource block PRB level.

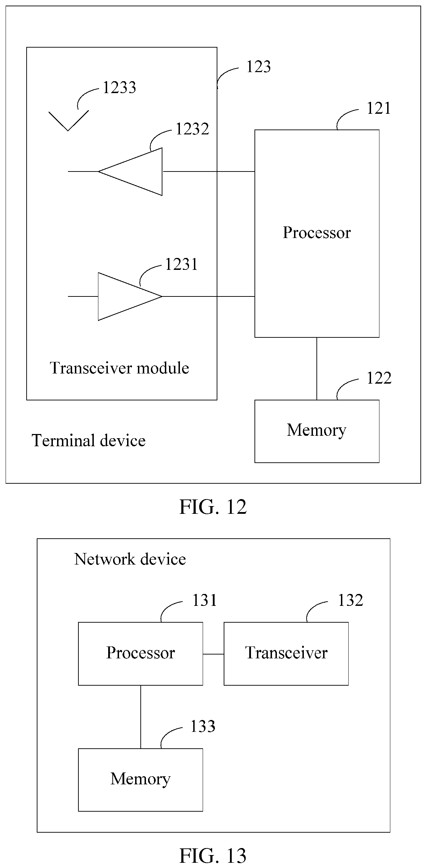

FIG. 12 is a schematic structural diagram of a terminal device according to an embodiment of this application. The terminal device may be the terminal device in any of the foregoing embodiments, and is configured to implement steps in the method in the foregoing embodiments.

As shown in FIG. 12, the terminal device may include a processor 121, a memory 122, and a transceiver module 123. The transceiver module may include components such as a receiver 1231, a transmitter 1232, and an antenna 1233. The terminal device may further include more or less components, or some components may be combined, or the components may be arranged in a different manner. This is not limited in this application.

The processor 121 is a control center of the terminal device, and is connected to each part of the entire terminal device by using various interfaces and lines. The processor 121 runs or executes a software program and/or a module stored in the memory 122, and invokes data stored in the memory 122, to perform various functions of the terminal device and/or process data. The processor 121 may include an integrated circuit (integrated circuit, IC), and for example, may include a single packaged IC or include a plurality of packaged ICs that have a same function or different functions and that are connected to each other. For example, the processor 121 may only include a central processing unit (Central Processing Unit, CPU), or may include a combination of a GPU, a digital signal processor (digital signal processor, DSP), and a control chip (such as a baseband chip) in the transceiver module. In various implementations of this application, the CPU may be a single operation core, or may include a plurality of operation cores.

The transceiver module 123 is configured to establish a communications channel, so that the terminal device is connected to a receiving device by using the communications channel, to implement data transmission between terminal devices. The transceiver module may include a communications module such as a wireless local area network (wireless local area network, WLAN) module, a Bluetooth module, and a baseband (base band) module, and a radio frequency (radio frequency, RF) circuit corresponding to the communications module, to perform wireless local area network communication, Bluetooth communication, infrared communication, and/or cellular communications system communication, for example, communication in Wideband Code Division Multiple Access (Wideband Code Division Multiple Access, WCDMA) and/or High Speed Downlink Packet Access (High Speed Downlink Packet Access, HSDPA). The transceiver module is configured to control communication between components in the terminal device, and may support direct memory access (direct memory access).

In different implementations of this application, each transceiver module in the transceiver module 123 is usually implemented in a form of an integrated circuit chip (integrated circuit chip), and may be selectively combined. There is no need to include all transceiver modules and corresponding antenna groups. For example, the transceiver module 123 may only include a baseband chip, a radio frequency chip, and a corresponding antenna, to provide a communication function in a cellular communications system. The terminal device may be connected to a cellular network (cellular network) or the Internet (internet) through a wireless communication connection, for example, wireless local area network access or WCDMA access, that is established by the transceiver module. In some optional implementations of this application, the communications module, for example, the baseband module, in the transceiver module may be integrated into the processor. A typical example is an APQ+MDM series platform provided by the Qualcomm (Qualcomm) company. The radio frequency circuit is configured to receive and send information or receive and send a signal in a call process. For example, the radio frequency circuit receives downlink information of the network device and sends the downlink information to the processor for processing; and sends uplink-related data to the network device. Usually, the radio frequency circuit includes a well-known circuit configured to perform the functions. The well-known circuit includes but is not limited to, an antenna system, a radio frequency transceiver, one or more amplifiers, a tuner, one or more oscillators, a digital signal processor, a codec (codec) chipset, a subscriber identity module (SIM) card, a memory, and the like. In addition, the radio frequency circuit may further communicate with a network and another device through wireless communication. The wireless communication may use any communication standard or protocol, including but not limited to, Global System for Mobile communications (Global System of Mobile communication, GSM), General Packet Radio Service (General Packet Radio Service, GPRS), Code Division Multiple Access (Code Division Multiple Access, CDMA), Wideband Code Division Multiple Access (Wideband Code Division Multiple Access, WCDMA for short), High Speed Uplink Packet Access (High Speed Uplink Packet Access, HSUPA), Long Term Evolution (Long Term Evolution, LTE), email, Short Messaging Service (Short Messaging Service, SMS), and the like.

In this embodiment of this application, a function needing to be implemented by the receiving module 1010 may be implemented by the transceiver module 123 of the terminal device, or may be implemented by the transceiver module 123 controlled by the processor 121. A function needing to be implemented by the processing module 1020 may be implemented by the processor 121.

FIG. 13 is a schematic structural diagram of a network device according to an embodiment of the present invention. The network device may be the network device in any of the foregoing embodiments, and is configured to implement steps in the method in the foregoing embodiments.

The network device may include a processor 131, a memory 132, a transceiver 133, and the like.

The processor 131 is a control center of the network device, and is connected to each part of the entire network device by using various interfaces and lines. The processor 131 runs or executes a software program and/or a module stored in the memory, and invokes data stored in the memory 132, to perform various functions of the network device and/or process data. The processor 131 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 132 may include a volatile memory (volatile memory), for example, a random access memory (random access memory, RAM); or may include a non-volatile memory (non-volatile memory), for example, a flash memory (flash memory), a hard disk drive (hard disk drive, HDD), or a solid-state drive (solid-state drive, SSD). Alternatively, the memory 132 may include a combination of the foregoing types of memories. The memory may store a program or code. The processor 131 in the network device executes the program or the code to implement functions of the network device.

The transceiver 133 may be configured to receive or send data. The transceiver may send data to a terminal device or another network device under control of the processor. The transceiver receives, under control of the processor, data sent by the terminal device or another network device.

In this embodiment of this application, the transceiver 133 may be configured to implement the step of sending the indication information on the preset frequency band on the method in the embodiment shown in FIG. 8. A function needing to be implemented by the sending module 1120 may be implemented by the transceiver 133 of the network device, or may be implemented by the transceiver 133 controlled by the processor 131. A function needing to be implemented by the processing module 1110 may be implemented by the processor 131.

In a specific implementation, an embodiment of this application further provides a computer storage medium. The computer storage medium may store a program. When the program is executed, some or all steps in each embodiment of a data transmission method provided in this application may be included. The storage medium may be a magnetic disk, an optical disc, a read-only memory (read-only memory, ROM), a random access memory (random access memory, RAM), or the like.

A person skilled in the art may clearly understand that, the technologies in the embodiments of this application may be implemented by software in addition to a necessary commodity hardware platform. Based on such an understanding, the technical solutions of the embodiments of this application essentially or the part contributing to the prior art may be implemented in a form of a software product. The computer software product is stored in a storage medium, such as a ROM/RAM, a hard disk, or an optical disc, and includes several instructions for instructing a computer device (which may be a personal computer, a server, a network device, or the like) to perform the methods described in the embodiments or some parts of the embodiments of this application.

The embodiments in this specification are all described in a progressive manner, for same or similar parts in the embodiments, refer to these embodiments, and each embodiment focuses on a difference from other embodiments. Especially, system and apparatus embodiments are basically similar to a method embodiment, and therefore is described briefly. For related parts, refer to description in the method embodiment.

The protection scope of the present claims is to be interpreted according to Art. 69 of the EPC protocol.

## Claims

1. A downlink control channel indication method, comprising:
a) receiving (S310), by a terminal device (21), indication information sent by a network device (22) on a preset frequency band of a first time frequency resource, wherein the first time frequency resource partially overlaps with a second time frequency resource; and
b) determining (S320), by the terminal device, a location of a physical downlink control channel PDCCH time frequency resource of the first time frequency resource according to the indication information; **characterized in that**
c) the preset frequency band is a band interval between a guard band of the first time frequency resource and a guard band of the second time frequency resource.

2. The method according to claim 1, wherein the receiving, by the terminal device, indication information sent by the network device on a preset frequency band of a first time frequency resource comprises:
receiving, by the terminal device, the indication information sent by the network device on a physical broadcast channel PBCH of the first time frequency resource.

3. The method according to claim 1, wherein the indication information comprises a physical control format indicator channel PCFICH; and
the determining, by the terminal device, a location of a physical downlink control channel PDCCH time frequency resource of the first time frequency resource according to the indication information comprises:
determining, by the terminal device, a control area of the first time frequency resource based on the PCFICH, wherein the PCFICH is located in the control area or is located on another frequency band outside the control area; and
performing, by the terminal device, blind detection in the control area to determine the location of the PDCCH time frequency resource of the first time frequency resource.

4. The method according to claim 3, further comprising: when the preset frequency band is occupied by the second time frequency resource, performing, by the terminal device, blind detection on a candidate frequency band of the first time frequency resource to obtain the PCFICH, wherein the candidate frequency band is all other frequency bands than the preset frequency band on the first time frequency resource, or is a frequency band at a particular location outside the preset frequency band on the first time frequency resource.

5. The method according to any one of claims 1 to 2, wherein the indication information comprises: a starting time-domain orthogonal frequency division multiplexing OFDM symbol, a quantity of time-domain OFDM symbols, a starting frequency-domain physical resource block PRB, and a quantity of frequency-domain PRBs; and
the determining, by the terminal device, a location of a physical downlink control channel PDCCH time frequency resource of the first time frequency resource according to the indication information comprises:
determining, by the terminal device, the location of the physical downlink control channel PDCCH time frequency resource of the first time frequency resource based on the starting time-domain orthogonal frequency division multiplexing OFDM symbol, the quantity of time-domain OFDM symbols, the starting frequency-domain physical resource block PRB, and the quantity of frequency-domain PRBs.

6. A downlink control channel indication method, comprising:
a) determining (S810), by a network device (22), a preset frequency band on a first time frequency resource, wherein the first time frequency resource partially overlaps with a second time frequency resource; and
b) sending (S820), by the network device (22), indication information on the preset frequency band, wherein the indication information comprises a physical control format indicator channel PCFICH or comprises: a starting time-domain orthogonal frequency division multiplexing OFDM symbol, a quantity of time-domain OFDM symbols, a starting frequency-domain physical resource block PRB, and a quantity of frequency-domain PRBs;
**characterized in that**
c) the preset frequency band is a band interval between a guard band of the first time frequency resource and a guard band of the second time frequency resource.

7. The method according to claim 6, wherein the preset frequency band is a frequency band on which a physical broadcast channel PBCH of the first time frequency resource is located.

8. The method according to any one of claims 6 to 7 , further comprising: when the preset frequency band is occupied by the second time frequency resource, sending, by the network device, the PCFICH on a candidate frequency band of the first time frequency resource, wherein the candidate frequency band is all other frequency bands than the preset frequency band on the first time frequency resource, or is a frequency band at a particular location outside the preset frequency band on the first time frequency resource.

9. A terminal device (21), comprising:
a) a receiving module (1010), configured to receive indication information sent by a network device on a preset frequency band of a first time frequency resource, wherein the first time frequency resource partially overlaps with a second time frequency resource; and
b) a processing module (1020), configured to determine a location of a physical downlink control channel PDCCH time frequency resource of the first time frequency resource according to the indication information; **characterized in that**
c) the preset frequency band is a band interval between a guard band of the first time frequency resource and a guard band of the second time frequency resource.

10. A network device (22), comprising:
a) a processing module (1110), configured to determine a preset frequency band on a first time frequency resource, wherein the first time frequency resource partially overlaps with a second time frequency resource; and
b) a sending module (1120), configured to send indication information on the preset frequency band, wherein the indication information comprises a physical control format indicator channel PCFICH or comprises: a starting time-domain orthogonal frequency division multiplexing OFDM symbol, a quantity of time-domain OFDM symbols, a starting frequency-domain physical resource block PRB, and a quantity of frequency-domain PRBs; **characterized in that**
c) the preset frequency band is a band interval between a guard band of the first time frequency resource and a guard band of the second time frequency resource.

11. A computer-readable storage medium, comprising an instruction, wherein when run on a computer, the instruction enables the computer to perform the method according to any one of claims 1 to 5, or enables the computer to perform the method according to any one of claims 6 to 8.

12. A computer program product, wherein when run on a computer, the computer program product enables the computer to perform the method according to any one of claims 1 to 5, or enables the computer to perform the method according to any one of claims 6 to 8.

13. A communications device, comprising a memory (122), a processor (121), and a computer program that is stored in the memory and that can be run on the processor, wherein when executing the program, the processor (121) implements the method according to any one of claims 1 to 5 or implements the method according to any one of claims 6 to 8.

## Patentansprüche

1. Downlink-Steuerkanalanzeigeverfahren, umfassend:
a) Empfangen (S310), durch eine Endgerätevorrichtung (21), von Anzeigeinformationen, die durch eine Netzwerkvorrichtung (22) auf einem voreingestellten Frequenzband einer ersten Zeitfrequenzressource gesendet werden, wobei die erste Zeitfrequenzressource teilweise mit einer zweiten Zeitfrequenzressource überlappt; und
b) Bestimmen (S320), durch die Endgerätevorrichtung, eines Orts einer "Physical Downlink Control Channel"-Zeitfrequenzressource, PDCCH-Zeitfrequenzressource, der ersten Zeitfrequenzressource gemäß den Anzeigeinformationen; **dadurch gekennzeichnet, dass**
c) das voreingestellte Frequenzband ein Bandabstand zwischen einem Sicherheitsabstand der ersten Zeitfrequenzressource und einem Sicherheitsabstand der zweiten Zeitfrequenzressource ist.

2. Verfahren nach Anspruch 1, wobei das Empfangen, durch die Endgerätevorrichtung, von Anzeigeinformationen, die durch die Netzwerkvorrichtung auf einem voreingestellten Frequenzband einer ersten Zeitfrequenzressource gesendet werden, umfasst:
Empfangen, durch die Endgerätevorrichtung, der Anzeigeinformationen, die durch die Netzwerkvorrichtung auf einem "Physical Broadcast Channel", PBCH, der ersten Zeitfrequenzressource gesendet werden.

3. Verfahren nach Anspruch 1, wobei die Anzeigeinformationen einen "Physical Control Format Indicator Channel", PCFICH, umfassen; und
das Bestimmen, durch die Endgerätevorrichtung, eines Orts einer "Physical Downlink Control Channel"-Zeitfrequenzressource, PDCCH-Zeitfrequenzressource, der ersten Zeitfrequenzressource gemäß den Anzeigeinformationen umfasst:
Bestimmen, durch die Endgerätevorrichtung, eines Steuerbereichs der ersten Zeitfrequenzressource basierend auf dem PCFICH, wobei sich der PCFICH im Steuerbereich befindet oder sich auf einem anderen Frequenzband außerhalb des Steuerbereichs befindet; und
Durchführen, durch die Endgerätevorrichtung, einer Blinderfassung im Steuerbereich zum Bestimmen des Orts der PDCCH-Zeitfrequenzressource der ersten Zeitfrequenzressource.

4. Verfahren nach Anspruch 3, ferner umfassend: wenn das voreingestellte Frequenzband durch die zweite Zeitfrequenzressource belegt ist, Durchführen, durch die Endgerätevorrichtung, einer Blinderfassung auf einem möglichen Frequenzband der ersten Zeitfrequenzressource zum Erhalten des PCFICH, wobei das mögliche Frequenzband alle anderen Frequenzbänder als das voreingestellte Frequenzband auf der ersten Zeitfrequenzressource ist oder ein Frequenzband an einem bestimmten Ort außerhalb des voreingestellten Frequenzbands auf der ersten Zeitfrequenzressource ist.

5. Verfahren nach einem der Ansprüche 1 bis 2, wobei die Anzeigeinformationen umfassen: ein Startzeitbereichs-"Orthogonal Frequency Division Multiplexing"-Symbol, Startzeitbereichs-OFDM-Symbol, eine Menge von Zeitbereichs-OFDM-Symbolen, einen Startfrequenzbereichs-"Physical Resource Block", Startfrequenzbereichs-PRB, und eine Menge von Frequenzbereichs-PRBs; und
das Bestimmen, durch die Endgerätevorrichtung, eines Orts einer "Physical Downlink Control Channel"-Zeitfrequenzressource, PDCCH-Zeitfrequenzressource, der ersten Zeitfrequenzressource gemäß den Anzeigeinformationen umfasst:
Bestimmen, durch die Endgerätevorrichtung, des Orts der "Physical Downlink Control Channel"-Zeitfrequenzressource, PDCCH-Zeitfrequenzressource, der ersten Zeitfrequenzressource basierend auf dem Startzeitbereichs-"Orthogonal Frequency Division Multiplexing"-Symbol, Startzeitbereichs-OFDM-Symbol, der Menge von Zeitbereichs-OFDM-Symbolen, des Startfrequenzbereichs-"Physical Resource Block", Startfrequenzbereichs-PRB, und der Menge von Frequenzbereichs-PRBs.

6. Downlink-Steuerkanalanzeigeverfahren, umfassend:
a) Bestimmen (S810), durch eine Netzwerkvorrichtung (22), eines voreingestellten Frequenzbands auf einer ersten Zeitfrequenzressource, wobei die erste Zeitfrequenzressource teilweise mit einer zweiten Zeitfrequenzressource überlappt; und
b) Senden (S820), durch die Netzwerkvorrichtung (22), von Anzeigeinformationen auf dem voreingestellten Frequenzband, wobei die Anzeigeinformationen einen "Physical Control Format Indicator Channel", PCFICH, umfassen oder umfassen: ein Startzeitbereichs-"Orthogonal Frequency Division Multiplexing"-Symbol, Startzeitbereichs-OFDM-Symbol, eine Menge von Zeitbereichs-OFDM-Symbolen, einen Startfrequenzbereichs-"Physical Resource Block", Startfrequenzbereichs-PRB, und eine Menge von Frequenzbereichs-PRBs; **dadurch gekennzeichnet, dass**
c) das voreingestellte Frequenzband ein Bandabstand zwischen einem Sicherheitsabstand der ersten Zeitfrequenzressource und einem Sicherheitsabstand der zweiten Zeitfrequenzressource ist.

7. Verfahren nach Anspruch 6, wobei das voreingestellte Frequenzband ein Frequenzband ist, auf dem sich ein "Physical Broadcast Channel", PBCH, der ersten Zeitfrequenzressource befindet.

8. Verfahren nach einem der Ansprüche 6 bis 7, ferner umfassend: wenn das voreingestellte Frequenzband durch die zweite Zeitfrequenzressource belegt ist, Senden, durch die Netzwerkvorrichtung, des PCFICH auf einem möglichen Frequenzband der ersten Zeitfrequenzressource, wobei das mögliche Frequenzband alle anderen Frequenzbänder als das voreingestellte Frequenzband auf der ersten Zeitfrequenzressource ist oder ein Frequenzband an einem bestimmten Ort außerhalb des voreingestellten Frequenzbands auf der ersten Zeitfrequenzressource ist.

9. Endgerätevorrichtung (21), umfassend:
a) ein Empfangsmodul (1010), das zum Empfangen von Anzeigeinformationen, die durch eine Netzwerkvorrichtung auf einem voreingestellten Frequenzband einer ersten Zeitfrequenzressource gesendet werden, wobei die erste Zeitfrequenzressource teilweise mit einer zweiten Zeitfrequenzressource überlappt, ausgelegt ist; und
b) ein Verarbeitungsmodul (1020), das zum Bestimmen eines Orts einer "Physical Downlink Control Channel"-Zeitfrequenzressource, PDCCH-Zeitfrequenzressource, der ersten Zeitfrequenzressource gemäß den Anzeigeinformationen ausgelegt ist; **dadurch gekennzeichnet, dass**
c) das voreingestellte Frequenzband ein Bandabstand zwischen einem Sicherheitsabstand der ersten Zeitfrequenzressource und einem Sicherheitsabstand der zweiten Zeitfrequenzressource ist.

10. Netzwerkvorrichtung (22), umfassend:
a) ein Verarbeitungsmodul (1110), das zum Bestimmen eines voreingestellten Frequenzbands auf einer ersten Zeitfrequenzressource, wobei die erste Zeitfrequenzressource teilweise mit einer zweiten Zeitfrequenzressource überlappt, ausgelegt ist; und
b) ein Sendemodul (1120), das zum Senden von Anzeigeinformationen auf dem voreingestellten Frequenzband, wobei die Anzeigeinformationen einen "Physical Control Format Indicator Channel", PCFICH, umfassen oder umfassen: ein Startzeitbereichs-"Orthogonal Frequency Division Multiplexing"-Symbol, Startzeitbereichs-OFDM-Symbol, eine Menge von Zeitbereichs-OFDM-Symbolen, einen Startfrequenzbereichs-"Physical Resource Block", Startfrequenzbereichs-PRB, und eine Menge von Frequenzbereichs-PRBs, ausgelegt ist; **dadurch gekennzeichnet, dass**
c) das voreingestellte Frequenzband ein Bandabstand zwischen einem Sicherheitsabstand der ersten Zeitfrequenzressource und einem Sicherheitsabstand der zweiten Zeitfrequenzressource ist.

11. Computerlesbares Speichermedium, umfassend eine Anweisung, wobei die Anweisung, bei Ausführung auf einem Computer, es dem Computer ermöglicht, das Verfahren nach einem der Ansprüche 1 bis 5 durchzuführen, oder es dem Computer ermöglicht, das Verfahren nach einem der Ansprüche 6 bis 8 durchzuführen.

12. Computerprogrammprodukt, wobei das Computerprogrammprodukt, bei Ausführung auf einem Computer, es dem Computer ermöglicht, das Verfahren nach einem der Ansprüche 1 bis 5 durchzuführen, oder es dem Computer ermöglicht, das Verfahren nach einem der Ansprüche 6 bis 8 durchzuführen.

13. Kommunikationsvorrichtung, umfassend einen Speicher (122), einen Prozessor (121) und ein Computerprogramm, das im Speicher gespeichert ist und das auf dem Prozessor ausgeführt werden kann, wobei der Prozessor (121) bei Ausführung des Programms das Verfahren nach einem der Ansprüche 1 bis 5 implementiert oder das Verfahren nach einem der Ansprüche 6 bis 8 implementiert.

## Revendications

1. Procédé d'indication de canal de contrôle en liaison descendante, comprenant les étapes consistant à :
a) recevoir (S310), par un dispositif terminal (21), une information d'indication envoyée par un dispositif de réseau (22) sur une bande de fréquences prédéfinie d'une première ressource temps-fréquence, la première ressource temps-fréquence chevauchant partiellement une seconde ressource temps-fréquence ; et
b) déterminer (S320), par le dispositif terminal, un emplacement d'une ressource temps-fréquence de canal physique de contrôle en liaison descendante (PDCCH) de la première ressource temps-fréquence selon l'information d'indication ; le procédé étant **caractérisé en ce que** :
c) la bande de fréquences prédéfinie est un intervalle de bande entre une bande de garde de la première ressource temps-fréquence et une bande de garde de la seconde ressource temps-fréquence.

2. Procédé selon la revendication 1, dans lequel la réception, par le dispositif terminal, d'une information d'indication envoyée par le dispositif de réseau sur une bande de fréquences prédéfinie d'une première ressource temps-fréquence comprend l'étape consistant à :
recevoir, par le dispositif terminal, l'information d'indication envoyée par le dispositif de réseau sur un canal physique de diffusion (PBCH) de la première ressource temps-fréquence.

3. Procédé selon la revendication 1, dans lequel l'information d'indication comprend un canal physique indicateur de format de contrôle (PCFICH) ; et
la détermination, par le dispositif terminal, d'un emplacement d'une ressource temps-fréquence de canal physique de contrôle en liaison descendante (PDCCH) de la première ressource temps-fréquence selon l'information d'indication comprend les étapes consistant à :
déterminer, par le dispositif terminal, une zone de contrôle de la première ressource temps-fréquence sur la base du PCFICH, le PCFICH étant situé dans la zone de contrôle ou étant situé sur une autre bande de fréquences à l'extérieur de la zone de contrôle ; et
réaliser, par le dispositif terminal, une détection aveugle dans la zone de contrôle pour déterminer l'emplacement de la ressource temps-fréquence PDCCH de la première ressource temps-fréquence.

4. Procédé selon la revendication 3, comprenant en outre l'étape consistant à : quand la bande de fréquences prédéfinie est occupée par la seconde ressource temps-fréquence, réaliser, par le dispositif terminal, une détection aveugle sur une bande de fréquences candidate de la première ressource temps-fréquence afin d'obtenir le PCFICH, la bande de fréquences candidate étant toutes les bandes fréquences autres que la bande de fréquences prédéfinie sur la première ressource temps-fréquence ou étant une bande de fréquences à un emplacement particulier à l'extérieur de la bande de fréquences prédéfinie sur la première ressource temps-fréquence.

5. Procédé selon l'une quelconque des revendications 1 et 2, dans lequel l'information d'indication comprend : un symbole de multiplexage par répartition orthogonale de la fréquence (OFDM) en domaine temporel de départ, un nombre de symboles OFDM en domaine temporel, un bloc de ressources physiques (PRB) en domaine fréquentiel de départ et un nombre de PRB en domaine fréquentiel ; et
la détermination, par le dispositif terminal, d'un emplacement d'une ressource temps-fréquence de canal physique de contrôle en liaison descendante (PDCCH) de la première ressource temps-fréquence selon l'information d'indication comprend l'étape consistant à :
déterminer, par le dispositif terminal, l'emplacement de la ressource temps-fréquence de canal physique de contrôle en liaison descendante (PDCCH) de la première ressource temps-fréquence sur la base du symbole de multiplexage par répartition orthogonale de la fréquence (OFDM) en domaine temporel de départ, du nombre de symboles OFDM en domaine temporel, du bloc de ressources physiques (PRB) en domaine fréquentiel de départ et du nombre de PRB en domaine fréquentiel.

6. Procédé d'indication de canal de contrôle en liaison descendante, comprenant les étapes consistant à :
a) déterminer (S810), par un dispositif de réseau (22), une bande de fréquences prédéfinie sur une première ressource temps-fréquence, la première ressource temps-fréquence chevauchant partiellement une seconde ressource temps-fréquence ; et
b) envoyer (S820), par le dispositif de réseau (22), une information d'indication sur la bande de fréquences prédéfinie, l'information d'indication comprenant un canal physique indicateur de format de contrôle (PCFICH) ou comprenant : un symbole de multiplexage par répartition orthogonale de la fréquence (OFDM) en domaine temporel de départ, un nombre de symboles OFDM en domaine temporel, un bloc de ressources physiques (PRB) en domaine fréquentiel de départ et un nombre de PRB en domaine fréquentiel ; le procédé étant **caractérisé en ce que** :
c) la bande de fréquences prédéfinie est un intervalle de bande entre une bande de garde de la première ressource temps-fréquence et une bande de garde de la seconde ressource temps-fréquence.

7. Procédé selon la revendication 6, dans lequel la bande de fréquences prédéfinie est une bande de fréquences sur laquelle est situé un canal physique de diffusion (PBCH) de la première ressource temps-fréquence.

8. Procédé selon l'une quelconque des revendications 6 et 7, comprenant en outre l'étape consistant à : quand la bande de fréquences prédéfinie est occupée par la seconde ressource temps-fréquence, envoyer, par le dispositif de réseau, le PCFICH sur une bande de fréquences candidate de la première ressource temps-fréquence, la bande de fréquences candidate étant toutes les bandes fréquences autres que la bande de fréquences prédéfinie sur la première ressource temps-fréquence ou étant une bande de fréquences à un emplacement particulier à l'extérieur de la bande de fréquences prédéfinie sur la première ressource temps-fréquence.

9. Dispositif terminal (21), comprenant :
a) un module de réception (1010), configuré pour recevoir une information d'indication envoyée par un dispositif de réseau sur une bande de fréquences prédéfinie d'une première ressource temps-fréquence, la première ressource temps-fréquence chevauchant partiellement une seconde ressource temps-fréquence ; et
b) un module de traitement (1020), configuré pour déterminer un emplacement d'une ressource temps-fréquence de canal physique de contrôle en liaison descendante (PDCCH) de la première ressource temps-fréquence selon l'information d'indication ; le dispositif terminal étant **caractérisé en ce que** :
c) la bande de fréquences prédéfinie est un intervalle de bande entre une bande de garde de la première ressource temps-fréquence et une bande de garde de la seconde ressource temps-fréquence.

10. Dispositif de réseau (22), comprenant :
a) un module de traitement (1110), configuré pour déterminer une bande de fréquences prédéfinie sur une première ressource temps-fréquence, la première ressource temps-fréquence chevauchant partiellement une seconde ressource temps-fréquence ; et
b) un module d'envoi (1120), configuré pour envoyer une information d'indication sur la bande de fréquences prédéfinie, l'information d'indication comprenant un canal physique indicateur de format de contrôle (PCFICH) ou comprenant : un symbole de multiplexage par répartition orthogonale de la fréquence (OFDM) en domaine temporel de départ, un nombre de symboles OFDM en domaine temporel, un bloc de ressources physiques (PRB) en domaine fréquentiel de départ et un nombre de PRB en domaine fréquentiel ; le dispositif de réseau étant **caractérisé en ce que** :
c) la bande de fréquences prédéfinie est un intervalle de bande entre une bande de garde de la première ressource temps-fréquence et une bande de garde de la seconde ressource temps-fréquence.

11. Support de stockage lisible par ordinateur, comprenant une instruction qui, lorsqu'elle est exécutée sur un ordinateur, permet à l'ordinateur de réaliser le procédé selon l'une quelconque des revendications 1 à 5 ou permet à l'ordinateur de réaliser le procédé selon l'une quelconque des revendications 6 à 8.

12. Produit de programme informatique, le produit de programme informatique, lorsqu'il est exécuté sur un ordinateur, permettant à l'ordinateur de réaliser le procédé selon l'une quelconque des revendications 1 à 5 ou permettant à l'ordinateur de réaliser le procédé selon l'une quelconque des revendications 6 à 8.

13. Dispositif de communication, comprenant une mémoire (122), un processeur (121) et un programme informatique qui est stocké dans la mémoire et qui peut être exécuté sur le processeur, le processeur (121), lorsqu'il exécute le programme, mettant en œuvre le procédé selon l'une quelconque des revendications 1 à 5 ou mettant en œuvre le procédé selon l'une quelconque des revendications 6 à 8.
